# EUROPÄISCHE PATENTSCHRIFT

(11) **EP 2 347 847 B1**
(45) Veröffentlichungstag und Bekanntmachung des Hinweises auf die Patenterteilung: **18.10.2017**
(21) Anmeldenummer: 11000109.6
(22) Anmeldetag: 10.01.2011
(51) Int. Cl.: B23F 1/02, B23F 15/06, B23F 23/12

(54) **Verfahren zum Schleifen eines Profils eines Werkstücks**
Method for grinding a workpiece section
Procédé de ponçage d'un profilé d'une pièce usinée

(30) Priorität: 23.01.2010 DE 102010005435
(43) Veröffentlichungstag der Anmeldung: 27.07.2011
(73) Patentinhaber: Kapp GmbH, 96450 Coburg (DE); NILES Werkzeugmaschinen GmbH, 12681 Berlin (DE)
(72) Erfinder: Woelfel, Friedrich, 96450 Coburg (DE)
(74) Vertreter: Gosdin, Michael

(56) Entgegenhaltungen:
- DE-B3-102008 035 525
- US-A1- 2004 040 133

## Beschreibung

Die Erfindung betrifft ein Verfahren zum Schleifen eines Profils eines Werkstücks, insbesondere einer Verzahnung, mit einer Verzahnungs- oder Profilschleifmaschine, wobei das zu schleifende Profil nacheinander zunächst im Rahmen eines Schrupp-Arbeitsgangs mit einem Schrupp-Schleifwerkzeug und anschließend im Rahmen eines Schlicht-Arbeitsgangs mit einem Schlicht-Schleifwerkzeug geschliffen wird, wobei durch den Schrupp- und den Schlicht-Arbeitsgang ein abzutragendes Aufmaß des Profils abgeschliffen wird, wobei das Schrupp- und das Schlichtwerkzeug koaxial zueinander auf einer gemeinsamen Werkzeugspindel oder auf zwei separaten Werkzeugspindeln angeordnet sind, wobei zur Ausführung eines Schleifhubs eine translatorische Verfahrbewegung zwischen den Schleifwerkzeugen und dem Werkstück in Richtung einer ersten Achse erzeugt wird und wobei das zu bearbeitende Werkstück eine Rotationsachse und mindestens eine Verzahnung aufweist.

Ein gattungsgemäßes Verfahren offenbart die DE 10 2008 035 525 B3**.** Eine ähnliche Lösung ist aus der US 2004/0040133 A1 bekannt.

Insbesondere bei der Herstellung von Zahnrädern kommt dem abschließenden Schleifprozess eine wichtige Bedeutung zu. Bei diesem werden die Zahnflanken einer Schleifoperation unterzogen, mit der sie auf die genaue Kontur gebracht werden. Eine effiziente Verfahrensweise bei der Herstellung der Verzahnung ist das Wälzschleifen mit einer Schleifschnecke oder das Profilschleifen mit einer Profilschleifscheibe.

Die präzise Formgebung erfolgt bevorzugt durch einen zweistufigen Schleifprozess in einer Profil- oder Verzahnungs-Schleifmaschine. Danach wird in einem ersten Schleif-Arbeitsschritt (Schruppen) ein Großteil des abzutragenden Aufmaßes zerspant. In einem sich anschließenden weiteren Schleif-Arbeitsschritt (Schlichten) wird die Endkontur des Profils hergestellt, wobei hierbei nur noch der Rest des Aufmaßes abgeschliffen wird. Dabei werden für das Schrupp-Schleifen und für das Schlicht-Schleifen beispielsweise Profilschleifscheiben eingesetzt, die das Profil durch Führung des Schleifwerkzeugs durch die Profillücke am Werkstück abbilden. Das hinlänglich bekannte Aufteilen der Schleifbearbeitung in Schruppen und Schlichten erhöht die Wirtschaftlichkeit des Verfahrens wesentlich.

Wird ein klassisches Stirnrad, d. h. dessen Verzahnung am zylindrischen Außenumfang des Zahnradgrundkörpers angeordnet ist, geschliffen, ergeben sich zumeist problemlose Verhältnisse. Die Schrupp- und die Schlicht-schleifscheibe werden z. B. durch ein Distanzstück beabstandet auf einer Werkzeugspindel aufgenommen. Durch eine lineare Shiftbewegung in Achsrichtung der Werkzeugspindel kann alternativ die Schrupp- oder die Schlicht-Schleifscheibe in Eingriff gebracht werden; hierzu wird eine lineare NC-Shiftachse verwendet. Angestrebt wird dabei aus wirtschaftlichen Gründen und auch deshalb, um eine möglichst hohe Bearbeitungsqualität zu erreichen, eine nur möglichst kurzhubige Shiftbewegung. Das kann dadurch erreicht werden, dass die Schrupp-Schleifscheibe beim Schlichten bzw. die Schlicht-Schleifscheibe beim Schruppen durch eine benachbarte Zahnlücke berührungslos hindurchfährt (sog. "Lückenfahrt"). Das Wechseln zwischen Schruppen und Schlichten erfolgt dann mit einer relativ geringen Shiftbewegung der Werkzeugspindel.

Andere Verhältnisse ergeben sich, wenn eine Verzahnung geschliffen werden muss, die sich an einer Stirnseite eines zylindrischen Zahnradgrundkörpers befindet. Ein Beispiel hierfür sind die sogenannten Hirth-Verzahnungen. Da sich bei der Ausführung eines Schleifhubs, mit dem die Schleifscheibe durch eine Zahnlücke gefahren wird, keine parallel hierzu verlaufende Nachbarlücke findet, kann eine "Lückenfahrt" nicht durchgeführt werden.

Ein kombiniertes Schruppen und Schlichten ist dadurch möglich, dass der axiale Abstand zwischen der Schrupp- und der Schlicht-Schleifscheibe groß gewählt wird, so dass sich die nicht benutzte Schleifscheibe bei der Bearbeitung in hinreichendem Abstand zur eingesetzten Schleifscheibe befindet und folglich nicht mit dem Werkstück kollidieren kann. Alternativ kann auch ein automatischer Werkzeugwechsel zwischen Schrupp- und Schlichtwerkzeug vorgenommen werden, so dass nacheinander verschiedene Werkzeuge separat zum Einsatz gebracht werden können.

Beide Möglichkeiten haben zunächst wirtschaftliche Nachteile zur Folge. Ein langer Shiftweg bedingt Nebenzeiten, die die Wirtschaftlichkeit des Schleifprozesses herabsetzen. Gleichermaßen kostet das Werkzeugwechseln Zeit, was ebenfalls auf Kosten der Wirtschaftlichkeit geht.

Zu anderen kann die Genauigkeit des Schleifverfahrens bei den genannten Maßnahmen leiden.

Der Erfindung liegt daher die **Aufgabe** zugrunde, ein Verfahren der eingangs genannten Art so fortzubilden, dass es möglich ist, die bestehenden Nachteile auch beim Schleifen von Stirnverzahnungen zu vermeiden. Demgemäß soll mit kurzen Shiftwegen zwischen Schruppen und Schlichten gearbeitet werden können. Ferner soll auf aufwändige Werkzeugwechsel zwischen Schrupp- und Schlichtwerkzeugen verzichtet werden können.

Die **Lösung** dieser Aufgabe durch die Erfindung ist dadurch gekennzeichnet, dass die Verzahnung in einem stirnseitigen Bereich des Werkstücks angeordnet ist, dass die mindestens eine Werkzeugspindel (oder in kinematischer Umkehr das Werkstück) während der Durchführung des Schrupp-Arbeitsgangs oder des Schlicht-Arbeitsgangs um eine in Richtung der ersten Achse weisende Drehachse um einen vorgegebenen Winkel aus einer Grundstellung so in eine Schwenkstellung verschwenkt wird, dass das sich nicht im Eingriff befindliche Schleifwerkzeug kollisionsfrei an dem zu bearbeitenden Profil vorbeigeführt werden kann, wobei die Grundstellung und die Schwenkstellung hinsichtlich der Verschwenkung um die erste Achse verschieden voneinander sind und wobei die mindestens eine Werkzeugspindel oder das Werkstück während der Durchführung des Schrupp-Arbeitsgangs um den vorgegebenen Winkel in die Schwenkstellung verschwenkt wird und während der Durchführung des Schlicht-Arbeitsgangs in der nichtverschwenkten Grundstellung benutzt wird.

Die genannte Grundstellung muss dabei keineswegs zwingend eine "Null-Stellung" der Achse sein.

Besonders bevorzugt ist vorgesehen, dass ein Schrupp-Schleifwerkzeug und ein Schlicht-Schleifwerkzeug eingesetzt werden, die unterschiedliche wirksame Außendurchmesser aufweisen. Dabei hat es sich speziell bewährt, wenn der wirksame Außendurchmesser des im Durchmesser größeren Schleifwerkzeugs zwischen 105 % und 130 % des wirksamen Außendurchmessers des im Durchmesser kleineren Schleifwerkzeugs beträgt.

Der vorgegebene Winkel beträgt zumeist zwischen 5° und 25°, besonders bevorzugt liegt er zwischen 10° und 20°.

Zumindest eines der Schleifwerkzeuge, vorzugsweise beide Schleifwerkzeuge, ist bevorzugt als Profilschleifscheibe ausgebildet. Ferner ist zumindest eines der Schleifwerkzeuge, vorzugsweise beide Schleifwerkzeuge, als abrichtfreies Schleifwerkzeug ausgebildet.

Mit der vorgeschlagenen Vorgehensweise wird es möglich, das Wechseln zwischen dem Schrupp-Schleifwerkzeug und dem Schlicht-Schleifwerkzeug durch einen kurzen Shiftweg zu bewerkstelligen, was in entsprechend kurzer Zeit möglich ist. Das Verschwenken der Werkzeugspindel um die genannte Achse kann sehr schnell erfolgen, so dass insgesamt eine sehr kurze Nebenzeit neben der eigentlichen Schleifzeit möglich ist. Somit kann die Wirtschaftlichkeit des Schleifverfahrens gesteigert werden.

Ferner ist die Qualität der Schleifoperation hoch, da auf lange Verfahrwege bzw. einen Werkzeugwechsel zwischen Schrupp- und Schlicht-Schleifwerkzeug verzichtet werden kann.

Somit können namentlich Stirnverzahnungen (insbesondere Hirth-Verzahnungen sowie ähnliche Verzahnungen) wirtschaftlich und präzise hartfeinbearbeitet werden.

In der Zeichnung ist ein Ausführungsbeispiel der Erfindung dargestellt. Es zeigen:
- Fig. 1: in perspektivischer Ansicht einen Ausschnitt einer Verzahnungsschleifmaschine, in der ein Werkstück mit einer Schrupp- und mit einer Schlicht-Schleifscheibe bearbeitet wird,
- Fig. 2: die Vorderansicht der Verzahnungsschleifmaschine nach Fig. 1 während des Schrupp-Schleifprozesses,
- Fig. 3: eine vergrößerte Darstellung des Eingriffsbereichs des Werkzeugs in die Verzahnung des Werkstücks während des Schrupp-Schleifprozesses und
- Fig. 4: die Vorderansicht der Verzahnungsschleifmaschine nach Fig. 1 während des Schlicht-Schleifprozesses.

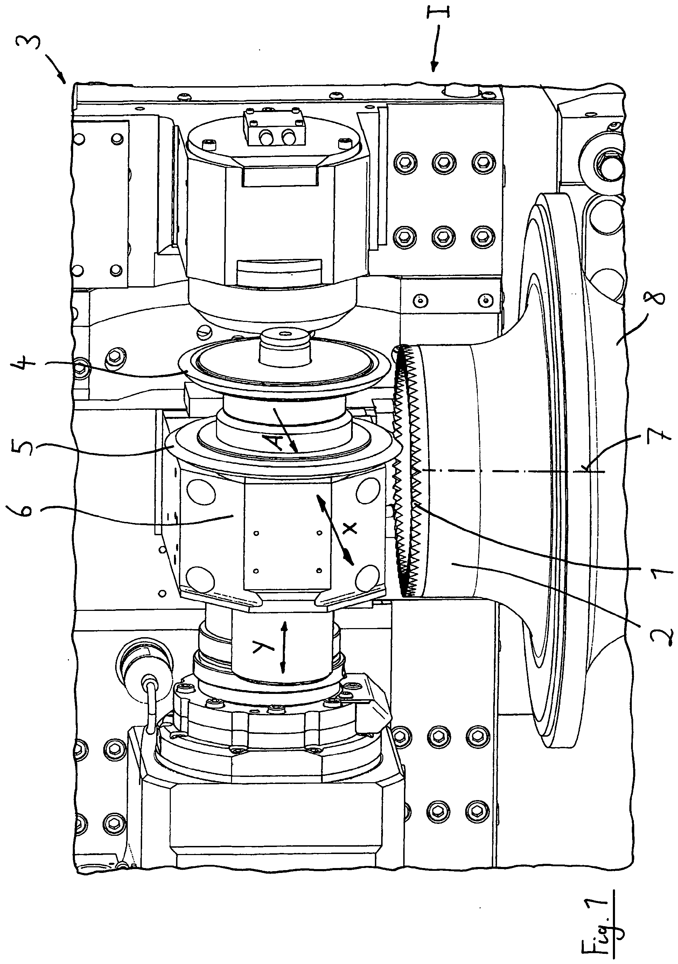

In Fig. 1 ist eine Verzahnungsschleifmaschine 3 dargestellt, mit der ein mit einer Verzahnung 1 versehenes Werkstück 2 feinbearbeitet, d. h. geschliffen werden kann. Bei der Verzahnung 1 handelt es sich um eine sog. Hirth-Verzahnung, d. h. das Werkstück 2 hat einen Grundkörper mit einer Rotationsachse 7, wobei sich am einen stirnseitigen Ende des Grundkörpers die Verzahnung 1 befindet, wie sie aus Fig. 1 gut ersichtlich ist.

Die Verzahnungsschleifmaschine 3 ist in an sich bekannter Weise ausgestattet. Das Werkstück 2 ist auf einer Werkstückspindel 8 aufgenommen, wobei vorliegend die Achse der Werkstückspindel 8 vertikal ausgerichtet ist (sie ist konzentrisch mit der Rotationsachse 7 des Werkstücks 2).

Das Schleifen der Verzahnung 1 erfolgt mit einer Werkzeugkombination bestehend aus einer Schrupp-Schleifscheibe 4 und einer Schlicht-Schleifscheibe 5, die beide auf einer Werkzeugspindel 6 aufgenommen sind und drehangetrieben werden. Die Werkzeugspindel 6 kann dabei in Richtung einer Shift-Achse y bewegt werden, um alternativ entweder die Schrupp-Schleifscheibe 4 oder die Schlicht-Schleifscheibe 5 mit der Verzahnung 1 in Eingriff zu bringen.

Die gesamte Werkzeugspindel 6 kann ferner Richtung der eingezeichneten Achse x eine translatorische Bewegung ausführen. Diese dient dazu, nach Positionierung einer Schleifscheibe 4 oder 5 dieselbe in bekannter Weise durch eine Zahnlücke zu fahren und Aufmaß von einer Zahnflanke abzuschleifen. Daneben ist die gesamte Werkzeugspindel 6 auch um eine Achse A schwenkbar. Diese Achse A verläuft parallel zur Achse x. Die Achse A wird in der Regel benötigt, um die Schleifscheibe auf den Schrägungswinkel eines außen-schräg-verzahnten Zahnrads einzustellen.

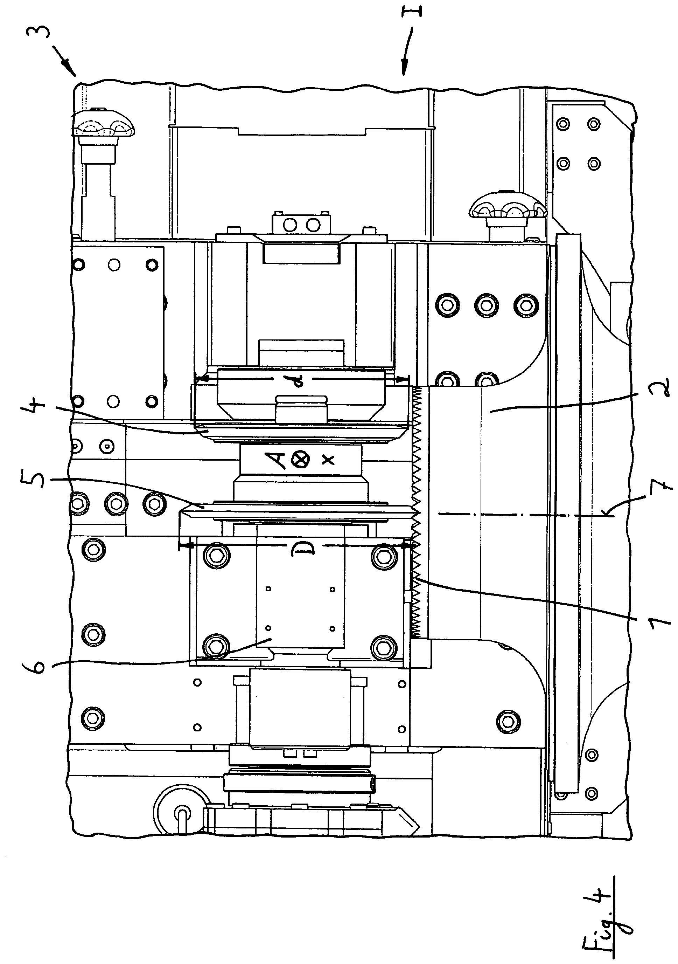

In Fig. 4 ist die zu Fig. 1 korrespondierende Vorderansicht der Schleifmaschine 3 zu sehen. In dieser Figur ist besonders gut zu sehen, dass die Schlicht-Schleifscheibe 5 einen größeren Außendurchmesser D hat als die Schrupp-Schleifscheibe 4, die einen Außendurchmesser d hat.

Zum Schleifen der Verzahnung 1 wird wie folgt vorgegangen. In an sich bekannter Weise erfolgt eine Aufteilung des Abtrags des Aufmaßes auf einer Zahnflanke in einen Schrupp-Arbeitsgang mit der Schrupp-Schleifscheibe 4 und in einen Schlicht-Arbeitsgang mit der Schlicht-Schleifscheibe 5.

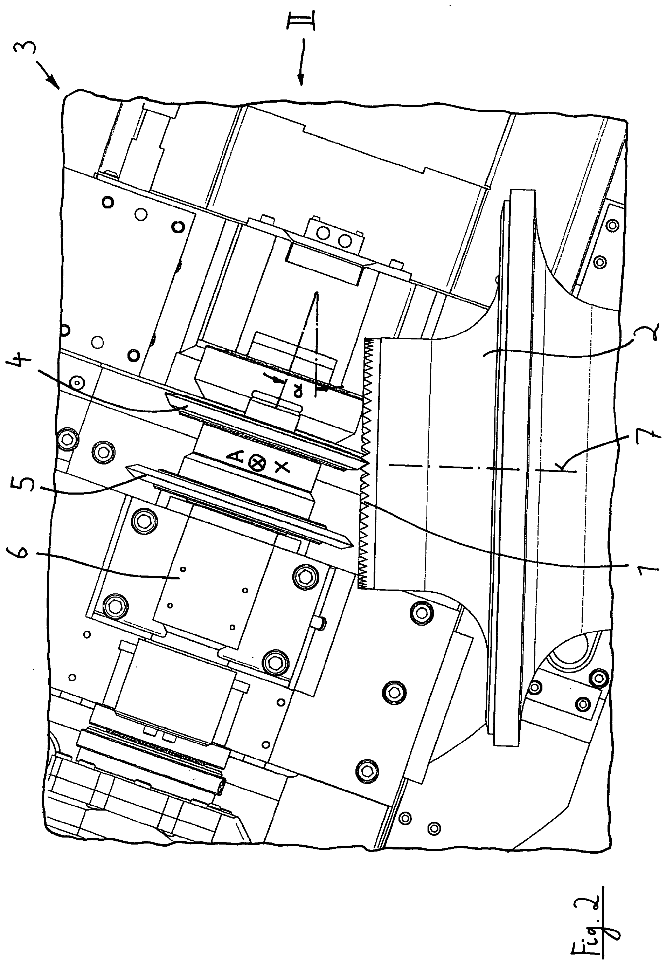

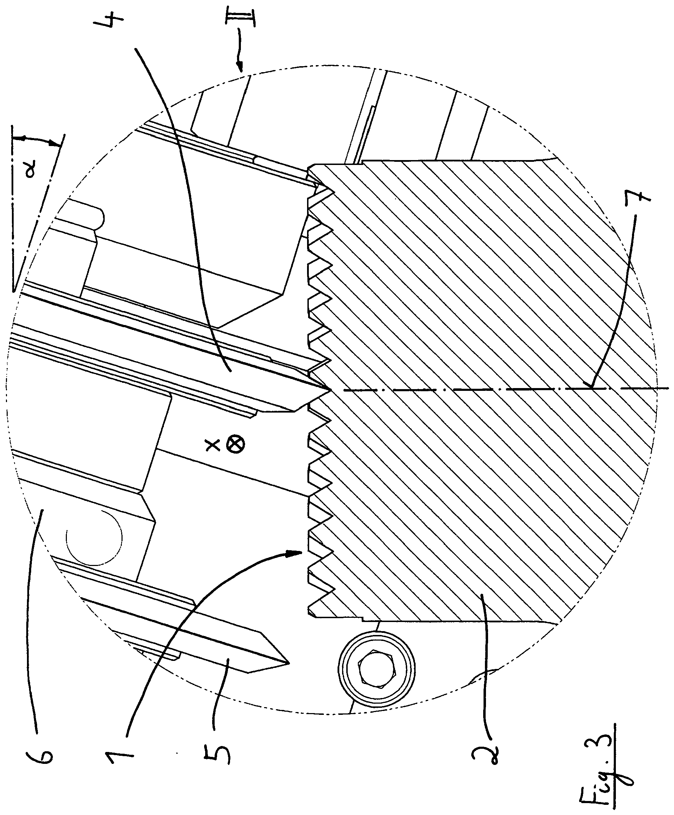

Der Schrupp-Schleifprozess ist in den Figuren 2 und 3 skizziert. Wesentlich ist, dass die Werkzeugspindel 6 während der Durchführung des Schrupp-Arbeitsgangs um die in Richtung der Achse x weisende Drehachse A um einen vorgegebenen Winkel α aus einer Grundstellung I, wie sie in den Figuren 1 und 4 zu sehen ist, so in eine Schwenkstellung II (s. Fig. 2 und 3) verschwenkt wird, dass die sich beim Schruppen nicht im Eingriff befindliche Schlicht-Schleifscheibe 5 kollisionsfrei an dem zu bearbeitenden Profil 1 vorbeigeführt werden kann. Das Profil der Schrupp-Schleifscheibe 4 ist entsprechend ausgebildet, dass sich trotz der Verschwenkung um den Winkel α das benötigte Verzahnungsprofil ergibt; dies ist gut in Fig. 3 zu erkennen.

Das bedeutet, dass trotz des Umstands, dass sich die Schlicht-Schleifscheibe 5 relativ nahe an der Schrupp-Schleifscheibe 4 befindet und mit einem kurzen Shift-Hub in Einsatzposition gebracht werden kann, keine Kollision der Schlicht-Schleifscheibe 5 ergibt, wenn das Schruppen durchgeführt wird. Besonders in Fig. 2 kann gesehen werden, dass sich beim Schruppen die Schlicht-Schleifscheibe 5 mit etwas Luft über der Verzahnung 1 befindet.

Zum Schlichten wird die Werkzeugspindel 6 von der Schwenkstellung II wieder zurück in die Grundstellung I gemäß Fig. 1 und Fig. 4 geschwenkt und in dieser Stellung die Verzahnung 1 geschlichtet. Da der Durchmesser d der Schrupp-Schleifscheibe 4 geringer gewählt ist als der Durchmesser D der Schlicht-Schleifscheibe 5, ergibt sich auch hier keine Kollision der nicht benutzten (Schrupp-)Schleifscheibe 4 mit dem Werkstück 2.

Mithin können auch mehrere (hier: zwei) Werkzeuge unter Verwendung einer "kurzen" Shiftachse zum Einsatz gebracht werden, wobei Kollisionen der sich nicht im Einsatz befindlichen Werkzeuge mit dem Werkstück vermieden werden.

Als Schwenkwinkel α hat sich ein solcher im Bereich von 10° bis 20° bewährt, insbesondere ein Schwenkwinkel von 17,5°.

Im Ausführungsbeispiel beträgt der Schleifscheibendurchmesser der Schlicht-Schleifscheibe 185 mm, der der Schrupp-Schleifscheibe 165 mm.

Möglich wäre es auch, das Schruppen und das Schlichten bei jeweiligen unterschiedlichen Schwenkwinkeln α ungleich Null vorzunehmen, d. h. wie bereits oben erwähnt, muss die genannte Grundstellung keineswegs zwingend die "Null-Stellung" der Achse sein.

### Bezugszeichenliste:

- 1: Profil (Verzahnung)
- 2: Werkstück (mit Stirnverzahnung)
- 3: Verzahnungs- oder Profilschleifmaschine
- 4: Schrupp-Schleifwerkzeug
- 5: Schlicht-Schleifwerkzeug
- 6: Werkzeugspindel
- 7: Rotationsachse des Werkstücks
- 8: Werkstückspindel

- x: erste Achse
- y: Shift-Achse
- A: Drehachse
- D: Außendurchmesser der Schlichtscheibe
- d: Außendurchmesser der Schruppscheibe

- α: Winkel

- I: Grundstellung
- II: Schwenkstellung

## Patentansprüche

1. Verfahren zum Schleifen eines Profils (1) eines Werkstücks (2), insbesondere einer Verzahnung, mit einer Verzahnungs- oder Profilschleifmaschine (3), wobei das zu schleifende Profil (1) nacheinander zunächst im Rahmen eines Schrupp-Arbeitsgangs mit einem Schrupp-Schleifwerkzeug (4) und anschließend im Rahmen eines Schlicht-Arbeitsgangs mit einem Schlicht-Schleifwerkzeug (5) geschliffen wird, wobei durch den Schrupp- und den Schlicht-Arbeitsgang ein abzutragendes Aufmaß des Profils (1) abgeschliffen wird, wobei das Schrupp- und das Schlichtwerkzeug (4, 5) koaxial zueinander auf einer gemeinsamen Werkzeugspindel (6) oder auf zwei separaten Werkzeugspindeln angeordnet sind, wobei zur Ausführung eines Schleifhubs eine translatorische Verfahrbewegung zwischen den Schleifwerkzeugen (4, 5) und dem Werkstück (2) in Richtung einer ersten Achse (x) erzeugt wird und wobei das zu bearbeitende Werkstück (2) eine Rotationsachse (7) und mindestens eine Verzahnung (1) aufweist,
**dadurch gekennzeichnet,**
**dass** die Verzahnung (1) in einem stirnseitigen Bereich des Werkstücks (2) angeordnet ist,
**dass** die mindestens eine Werkzeugspindel (6) oder das Werkstück (2) während der Durchführung des Schrupp-Arbeitsgangs oder des Schlicht-Arbeitsgangs um eine in Richtung der ersten Achse (x) weisende Drehachse (A) um einen vorgegebenen Winkel (α) aus einer Grundstellung (I) so in eine Schwenkstellung (II) verschwenkt wird, dass das sich nicht im Eingriff befindliche Schleifwerkzeug (5) kollisionsfrei an dem zu bearbeitenden Profil (1) vorbeigeführt werden kann,
wobei die Grundstellung (I) und die Schwenkstellung (II) hinsichtlich der Verschwenkung um die erste Achse (x) verschieden voneinander sind und
wobei die mindestens eine Werkzeugspindel (6) oder das Werkstück (2) während der Durchführung des Schrupp-Arbeitsgangs um den vorgegebenen Winkel (α) in die Schwenkstellung (II) verschwenkt wird und während der Durchführung des Schlicht-Arbeitsgangs in der nichtverschwenkten Grundstellung (I) benutzt wird.

2. Verfahren nach Anspruch 1, **dadurch gekennzeichnet, dass** ein Schrupp-Schleifwerkzeug (4) und ein Schlicht-Schleifwerkzeug (5) eingesetzt werden, die unterschiedliche wirksame Außendurchmesser (D, d) aufweisen.

3. Verfahren nach Anspruch 2, **dadurch gekennzeichnet, dass** der wirksame Außendurchmesser (D) des im Durchmesser größeren Schleifwerkzeugs (5) zwischen 105 % und 130 % des wirksamen Außendurchmessers (d) des im Durchmesser kleineren Schleifwerkzeugs (4) beträgt.

4. Verfahren nach einem der Ansprüche 1 bis 3, **dadurch gekennzeichnet, dass** der vorgegebene Winkel (α) zwischen 5° und 25° beträgt.

5. Verfahren nach Anspruch 4, **dadurch gekennzeichnet, dass** der vorgegebene Winkel (α) zwischen 10° und 20° beträgt.

6. Verfahren nach einem der Ansprüche 1 bis 5, **dadurch gekennzeichnet, dass** zumindest eines der Schleifwerkzeuge (4, 5), vorzugsweise beide Schleifwerkzeuge (4, 5), als Profilschleifscheiben ausgebildet sind.

7. Verfahren nach einem der Ansprüche 1 bis 6, **dadurch gekennzeichnet, dass** zumindest eines der Schleifwerkzeuge (4, 5), vorzugsweise beide Schleifwerkzeuge (4, 5), als abrichtfreies Schleifwerkzeug ausgebildet sind.

## Claims

1. Method for the grinding of a profile (1) of a workpiece (2), especially of a gearing, with a gear or profile grinding machine (3), wherein the profile (1) which has to be ground is successively at first ground during a roughing operation with a roughing grinding tool (4) and is afterwards ground during a finishing operation with a finishing grinding tool (5), wherein a stock of the profile (1) which has to be removed is ground by the roughing and the finishing operation, wherein the roughing grinding tool (4) and the finishing grinding tool (5) are arranged coaxially on a common tool spindle (6) or on two separate tool spindles, wherein a translational movement is created between the grinding tools (4, 5) and the workpiece (2) in a direction of a first axis (x) for carrying out a grinding stroke and wherein the workpiece (2) which has to be machined comprises an axis of rotation (7) and at least one gearing (1),
**characterized in**
**that** the gearing (1) is arranged at a face side of the workpiece (2),
**that** the at least one tool spindle (6) or the workpiece (2) is swiveled around an axis (A) of rotation which is directed in the direction of the first axis (x) by a predetermined angle (α) during the execution of the roughing operation or the finishing operation from a basic position (I) into a swivel position (II) in such a way that the grinding tool (5) which is not in operation can be passed over the profile (1) to be machined without collision,
wherein the basic position (I) and the swivel position (II) are different from another with respect to the swiveling around the first axis (x) and
wherein the at least one tool spindle (6) or the workpiece (2) is swiveled during the execution of the roughing operation by the predetermined angle (α) into the swivel position (II) and is used during the execution of the finishing operation in the non-swiveled basic position (I).

2. Method according to claim 1, **characterized in that** a roughing grinding tool (4) and a finishing grinding tool (5) are used which have different effective outer diameters (D, d).

3. Method according to claim 2, **characterized in that** the effective outer diameter (D) of the grinding tool (5) which has the bigger diameter is between 105 % and 130 % of the effective outer diameter (d) of the grinding tool (4) which has the smaller diameter.

4. Method according to one of claims 1 to 3, **characterized in that** the predetermined angle (α) is between 5° and 25°.

5. Method according to claim 4, **characterized in that** the predetermined angle (α) is between 10° and 20°.

6. Method according to one of claims 1 to 5, **characterized in that** at least one of the grinding tools (4, 5), preferably both grinding tools (4, 5), are profile grinding wheels.

7. Method according to one of claims 1 to 6, **characterized in that** at least one of the grinding tools (4, 5), preferably both grinding tools (4, 5), are non-dressable grinding tools.

## Revendications

1. Procédé de ponçage d'un profil (1) d'une pièce (2), en particulier d'une denture, avec une machine de ponçage de denture ou de profil (3), dans lequel on ponce le profil à poncer (1) successivement d'abord dans le cadre d'une opération de dégrossissage avec un outil de ponçage de dégrossissage (4) et ensuite dans le cadre d'une opération de finition avec un outil de ponçage de finition (5), dans lequel on enlève par l'opération de dégrossissage et de finition une épaisseur à enlever du profil (1), dans lequel l'outil de dégrossissage et l'outil de finition (4, 5) sont montés de façon coaxiale l'un à l'autre sur une broche porte-outil commune (6) ou sur deux broches porte-outil séparées, dans lequel pour l'exécution d'une course de ponçage on produit un mouvement de déplacement en translation entre les outils de ponçage (4, 5) et la pièce (2) dans la direction d'un premier axe (x) et dans lequel la pièce à usiner (2) présente un axe de rotation (7) et au moins une denture (1),
**caractérisé en ce que**
la denture (1) est disposée dans une région frontale de la pièce (2),
on fait pivoter ladite au moins une broche porte-outil (6) ou la pièce (2) pendant l'exécution de l'opération de dégrossissage ou l'opération de finition autour d'un axe de rotation (A) orienté dans la direction du premier axe (x) d'un angle prédéterminé (α) à partir d'une position de base (I) dans une position inclinée (II), de telle manière que l'outil de ponçage (5) ne se trouvant pas en prise puisse être déplacé sans collision le long du profil à usiner (1),
dans lequel la position de base (I) et la position inclinée (II) sont différentes l'une de l'autre en ce qui concerne le pivotement autour du premier axe (x), et
dans lequel on fait pivoter ladite au moins une broche porte-outil (6) ou la pièce (2) de l'angle prédéterminé (α) dans la position inclinée (II) pendant l'exécution de l'opération de dégrossissage et on l'utilise dans la position de base non inclinée (I) pendant l'opération de finition.

2. Procédé selon la revendication 1, **caractérisé en ce que** l'on utilise un outil de ponçage de dégrossissage (4) et un outil de ponçage de finition (5), qui présentent des diamètres extérieurs utiles différents (D, d).

3. Procédé selon la revendication 2, **caractérisé en ce que** le diamètre extérieur utile (D) de l'outil de ponçage de plus grand diamètre (5) vaut entre 105 % et 130 % du diamètre extérieur utile (d) de l'outil de ponçage de plus petit diamètre (4).

4. Procédé selon l'une quelconque des revendications 1 à 3, **caractérisé en ce que** l'angle prédéterminé (α) vaut entre 5° et 25°.

5. Procédé selon la revendication 4, **caractérisé en ce que** l'angle prédéterminé (α) vaut entre 10° et 20°.

6. Procédé selon l'une quelconque des revendications 1 à 5, **caractérisé en ce qu'**au moins un des outils de ponçage (4, 5), de préférence les deux outils de ponçage (4, 5), sont des meules profilées.

7. Procédé selon l'une quelconque des revendications 1 à 6, **caractérisé en ce qu'**au moins un des outils de ponçage (4, 5), de préférence les deux outils de ponçage (4, 5), est/sont un outil de ponçage sans dressage.
